# EUROPÄISCHE PATENTSCHRIFT

(11) **EP 3 842 301 B1**
(45) Veröffentlichungstag und Bekanntmachung des Hinweises auf die Patenterteilung: **08.02.2023**
(21) Anmeldenummer: 20212475.6
(22) Anmeldetag: 08.12.2020
(51) Int. Cl.: B60T 17/22, B60L 7/26, B60L 7/28, B60L 15/20, B61L 3/00

(54) **VERFAHREN ZUR ASSISTENZ BEI DER STEUERUNG EINER GESCHWINDIGKEIT EINES SCHIENENFAHRZEUGS, VERFAHREN ZUM ASSISTIERTEN STEUERN EINER GESCHWINDIGKEIT EINES SCHIENENFAHRZEUGS UND ZUGEHÖRIGES SCHIENENFAHRZEUG**
METHOD FOR ASSISTING IN CONTROLLING THE SPEED OF A RAILWAY VEHICLE, METHOD FOR ASSISTED CONTROL OF A SPEED OF A RAILWAY VEHICLE AND ASSOCIATED RAILWAY VEHICLE
PROCÉDÉ D'AIDE À LA COMMANDE D'UNE VITESSE D'UN VÉHICULE FERROVIAIRE, PROCÉDÉ DE COMMANDE ASSISTÉ D'UNE VITESSE D'UN VÉHICULE FERROVIAIRE ET VÉHICULE FERROVIAIRE ASSOCIÉ

(30) Priorität: 16.12.2019 DE 102019134583
(43) Veröffentlichungstag der Anmeldung: 30.06.2021
(73) Patentinhaber: Bombardier Transportation GmbH, 10785 Berlin (DE)
(72) Erfinder: Buschbeck, Jan, 13509 Berlin (DE); Zechel, Marc, 10409 Berlin (DE)
(74) Vertreter: Zimmermann & Partner Patentanwälte mbB

(56) Entgegenhaltungen:
- EP-B1- 1 400 426
- EP-B1- 1 400 426
- DE-A1-102009 023 704
- DE-A1-102009 025 553
- DE-A1-102014 003 121
- DE-A1-102017 217 226

## Beschreibung

### Technisches Gebiet

Die vorliegende Erfindung betrifft Verfahren zur Assistenz bei der Steuerung sowie zur assistierten Steuerung der Geschwindigkeit von Schienenfahrzeugen mit einer Nutzbremse und einer Reibungsbremse, insbesondere von derartigen Triebfahrzeugen, sowie zugehörige Schienenfahrzeuge.

### Vorbekannter Stand der Technik

Gegenwärtig ist es für Fahrzeugführer von Schienenfahrzeugen, insbesondere Triebfahrzeugführer häufig schwierig, das Fahrzeug so zu bremsen, dass möglichst viel Bremsenergie zurückgespeist werden kann. Insbesondere für ein schienengebundenes Batteriefahrzeug ist es aber wichtig, beim Bremsen möglichst wenig Bewegungsenergie in Wärme umzuwandeln, um eine möglichst hohe Reichweite zu erreichen.

Zum Bremsen von Lokomotiven können zwei getrennte Bremshebel vorgesehen sein, einer für eine mechanische und der andere für eine elektrodynamische Bremse. Außerdem kann vorgesehen sein, dass der Fahrzeugführer über ein Manometer den Druck der pneumatisch betriebenen mechanischen Bremsen überwacht. Diese Lösungen erfordern eine hohe Aufmerksamkeit und viel Erfahrung des Fahrzeugführers. Zudem wird von Betreibern häufig gewünscht, die Schienenfahrzeugbedienung möglichst weitgehend zu vereinfachen, um die Sicherheit zu erhöhen und/oder günstigeres Personal einsetzen zu können. Daher wird häufig eine Fahrzeugsteuerung mit nur einem kombinierten Fahr-/Bremshebel angestrebt.

Beispielsweise wird in der EP 1400 426 B1 ein verbesserter Fahrschalter beschrieben, der alle der für das Fahren eines Schienenfahrzeugs unbedingt erforderlichen Funktionen in einer einzelnen Vorrichtung integrieren kann. Insbesondere kann der Fahrschalter in zwei Richtungen zum Betätigen von zwei Funktionen, die sich gegenseitig ausschließen wie die Fahr- und Bremsfunktionen, betätigt werden. Dazu kann der Fahrschalter mit einem Bremssystem und einem Antriebssystem des Schienenfahrzeugs verbunden sein. Der Fahrer kann ein pneumatisches Bremssystem oder ein elektrodynamisches Bremssystem des Schienenfahrzeugs einzeln auswählen oder er kann es einem selbsttätigen Bremssystem überlassen, diese Systeme gemäß einem vordefinierten Programm auszuwählen und/oder zu kombinieren.

Außerdem beschreibt die EP 3 219 560 B1 ein Verfahren zur Bereitstellung von Bremsenauswahlempfehlungen für einen Führer eines Zuges während des Zugbetriebs, wobei der Zug mindestens eine elektrodynamische Bremse und mindestens eine Reibungsbremse hat, und wobei das Verfahren die folgenden Schritte aufweist: Definition einer Bremsenbevorzugungsrate zwischen der mindestens einen elektrodynamischen Bremse und der mindestens einen Reibungsbremse, Bestimmung eines energieoptimierten Geschwindigkeitsprofils für ein Fahrtsegment des Zuges, wobei das energieoptimierte Geschwindigkeitsprofil eine Vielzahl von Bremsabschnitten hat, und die Zuordnung eines jeden der Vielzahl von Bremsabschnitten zu einer jeweiligen Bremsenauswahlempfehlung, wobei die Bestimmung des energieoptimierten Geschwindigkeitsprofils und die Zuordnung eines jeden der Vielzahl von Bremsabschnitten zu einer jeweiligen Bremsenauswahlempfehlung durch eine maximale Fahrzeit und die Bremsenbevorzugungsrate zwischen der mindestens einen elektrodynamischen Bremse für das Fahrtsegment eingeschränkt werden; und Bereitstellung der jeweiligen Bremsenauswahlempfehlungen für die Vielzahl von Bremsabschnitten für den Führer des Zuges. Dabei kann die Bremsenbevorzugungsrate ein Bremsenbevorzugungswert sein, der ein Verhältnis zwischen den Bremsenanziehzeiten der mindestens einen elektrodynamischen Bremse und der mindestens einen Reibungsbremse oder ein Verhältnis zwischen den Bremsenergiemengen der mindestens einen elektrodynamischen Bremse und der mindestens einen Reibungsbremse repräsentiert, und/oder auf Bremsenwartungsintervallen für die mindestens eine elektrodynamische Bremse und die mindestens eine Reibungsbremse beruhen.

Die DE 10 2017 217226 A1 offenbart ein Verfahren zur Steuerung einer Geschwindigkeit eines Schienenfahrzeugs. Das Schienenfahrzeug weist eine Nutzbremse, eine Reibungsbremse und ein Bedienelement auf. Über das Bedienelement kann eine Gesamtbremskraft eingestellt werden, die auf die Nutzbremse und die Reibungsbremse aufgeteilt wird. Es wird auch eine aktuelle Fahrgeschwindigkeit des Schienenfahrzeugs bestimmt.

### Nachteile des Standes der Technik

Die bisher bekannten Lösungen zum manuellen Bremsen von Schienenfahrzeugen mit einer Nutzbremse und einer Reibungsbremse sind vergleichsweise kompliziert und/oder nicht ausreichend an ein energieeffizientes Bremsen angepasst.

### Problemstellung

Eine Aufgabe der vorliegenden Erfindung ist es, die Fahrzeugbedienung für den Schienenfahrzeugführer eines Schienenfahrzeugs mit einer Nutzbremse und einer Reibungsbremse möglichst einfach und/oder intuitiv zu gestalten und dabei eine möglichst energiesparende Fahrweise zu ermöglichen.

### Erfindungsgemäße Lösung

Die obige Aufgabe wird durch ein Verfahren nach Anspruch 1, ein Verfahren nach Anspruch 3 und ein Schienenfahrzeug nach Anspruch 7 gelöst.

Gemäß einer Ausführungsform weist ein Verfahren zur Assistenz bei der Steuerung einer Geschwindigkeit eines Schienenfahrzeugs aufweisend mindestens eine Nutzbremse, mindestens eine Reibungsbremse, und ein Bedienelement, über das eine auf die mindestens eine Nutzbremse und die mindestens eine Reibungsbremse aufteilbare Gesamtbremskraft einstellbar ist: Bestimmen einer aktuellen Fahrgeschwindigkeit des Schienenfahrzeugs; Bestimmen einer gewünschten Stellung des Bedienelements bei der ein Bremskraftanteil der mindestens einen Nutzbremse für die aktuelle Fahrgeschwindigkeit gemäß einer vorgegebenen Abhängigkeit des Bremskraftanteils der mindestens einen Nutzbremse an der Gesamtbremskraft von der Geschwindigkeit des Schienenfahrzeugs und der Stellung des Bedienelements einen maximalen Wert annimmt; und Verwenden der gewünschten Stellung des Bedienelements zur Ausgabe einer sich auf die Stellung des Bedienelements beziehenden Empfehlung an einen Führer des Schienenfahrzeugs und/oder zum Steuern eines Verhaltens des Bedienelements.

Dies ermöglicht es dem Führer des Schienenfahrzeugs, im Folgenden auch Schienenfahrzeugführer oder kurz Fahrer genannt, das manuelle Bremsen des Schienenfahrzeugs über nur ein Bedienelement auf einfache und/oder intuitive Weise und damit ohne langwieriges Bremstraining so auszuführen, dass (möglichst) viel Bremskraft von der (den) Nutzbremse(n) aufgebracht wird.

Im Ergebnis kann beim manuellen Bremsen auf einfache Weise ein besonders hoher Anteil der kinetischen Energie des Schienenfahrzeugs rekuperiert werden bzw. je nach Fahrzeugausführung und/oder Betriebszustand zurück in eine Fahrzeugbatterie und/oder ein externes elektrisches Versorgungssystem gespeist werden.

Dies gilt unabhängig davon, ob der Fahrer von sich aus einen Bremsvorgang einleitet oder beim Bremsen von einem Fahrassistenzsystem angeleitet wird, das eine Sollgeschwindigkeit und/oder eine Sollzug-/Sollbremskraft vorgibt.

Im Folgenden werden der Bremskraftanteil der Reibungsbremse(n) auch als Reibungsbremsenbremskraftanteil und der Bremskraftanteil der Nutzbremse(n) auch als Nutzbremsenbremskraftanteil bezeichnet.

Das Verfahren kann ein Bestimmen einer aktuellen Stellung des Bedienelements aufweisen.

Außerdem kann die aktuelle Stellung des Bedienelements und/oder eine Abweichung der aktuellen Stellung von der gewünschten Stellung des Bedienelements zur Ausgabe der Empfehlung, zur Bestimmung der auszugebenden Empfehlung und/oder zum Steuern des Verhaltens des Bedienelements verwendet werden.

Dies ermöglicht eine besonders intuitive Bedienung des Bedienelement durch den Fahrer.

Beispielsweise kann vorgesehen sein, dass sich eine Ausgabeintensität der Empfehlung und/oder das Verhalten des Bedienelements proportional zur Abweichung der aktuellen Stellung von der gewünschten Stellung ändert.

Dies kann aber auch von der Art der Ausgabe bzw. des Verhaltens abhängen.

Beispielsweise kann die Ausgabeintensität an eine mittlere oder sogar Fahrerspezifische Empfindlichkeit angepasst sein.

Gemäß einer Ausführungsform weist ein Verfahren zum assistierten Steuern einer Geschwindigkeit eines Schienenfahrzeugs aufweisend mindestens eine Nutzbremse, mindestens eine Reibungsbremse, und ein Bedienelement, über das eine Gesamtbremskraft der mindestens einen Nutzbremse und der mindestens einen Reibungsbremse einstellbar ist: Bestimmen einer aktuellen Stellung des Bedienelements; Bestimmen einer aktuellen Fahrgeschwindigkeit des Schienenfahrzeugs; Verwenden der aktuellen Stellung des Bedienelements und der aktuellen Fahrgeschwindigkeit zum Bestimmen eines aktuellen Bremskraftanteils der mindestens einen Nutzbremse an einer der aktuellen Stellung des Bedienelements entsprechenden aktuellen Gesamtbremskraft des Schienenfahrzeugs (bzw. der mindestens einen Nutzbremse und der mindestens einen Reibungsbremse) und eines aktuellen Bremskraftanteils der mindestens einen Reibungsbremse an der aktuellen Gesamtbremskraft gemäß einer jeweiligen vorgegebenen Abhängigkeit des Bremskraftanteils der mindestens einen Nutzbremse und des Bremskraftanteils der mindestens einen Reibungsbremse von der Geschwindigkeit des Schienenfahrzeugs und der Stellung des Bedienelements; und Bestimmen einer gewünschten Stellung des Bedienelements bei der der Bremskraftanteil der mindestens einen Nutzbremse für die aktuelle Fahrgeschwindigkeit gemäß der vorgegebenen Abhängigkeit des Bremskraftanteils der mindestens einen Nutzbremse von der Geschwindigkeit des Schienenfahrzeugs und der Stellung des Bedienelements einen maximalen Wert annimmt; und Verwenden der gewünschten Stellung des Bedienelements zur Ausgabe einer sich auf die Stellung des Bedienelements beziehenden Empfehlung an einen Führer des Schienenfahrzeugs und/oder zum Steuern eines Verhaltens des Bedienelements.

Auch beim Verwenden der gewünschten Stellung kann die aktuelle Stellung des Bedienelements und/oder eine Abweichung der aktuellen Stellung des Bedienelements von der gewünschten Stellung des Bedienelements entsprechend berücksichtigt werden.

Die Ausgabe der Empfehlung kann bei den hierin beschriebenen Verfahren akustisch, optisch und/oder haptisch erfolgen.

Außerdem kann vorgesehen sein, dass das jeweilige Verfahren mehrfach ausgeführt wird.

Beispielsweise kann vorgesehen sein, das jeweilige Verfahren periodisch zu wiederholen, mindestens einmal pro Sekunde, typischerweise mindestens zweimal oder sogar mindestens fünfmal pro Sekunde auszuführen, und/oder wenn das Schienenfahrzeug fährt, zumindest dann wenn die aktuellen Fahrgeschwindigkeit größer oder gleich als ein typischerweise fahrzeugspezifischer vorgegebener Schwellenwert von z.B. 25 km/h oder 30 km/h ist.

Hierzu wird angemerkt, dass beispielsweise aus Sicherheitsgründen vorgesehen, gewünscht bzw. vorgeschrieben sein kann, beim Abbremsen von Fahrzeuggeschwindigkeiten unterhalb des vorgegebenen Schwellenwerts, zum Beispiel beim Annähern an rote Signale nur die Reibungsbremse(n) zu verwenden.

Außerdem kann das Bedienelement als Fahrbremshebel, beispielsweise als ein entsprechender Joystick ausgeführt sein.

In diesen Ausführungsformen kann vorgesehen sein, die Verfahren zur Assistenz bei der Steuerung und oder die Verfahren zum assistierten Steuern der Fahrzeuggeschwindigkeit bzw. das Bestimmen der gewünschten Stellung des Bedienelements und/oder das Verwenden der gewünschten Stellung nur dann auszuführen, wenn die aktuelle Stellung des Bedienelements einer Brems- und/oder einer Neutralstellung entspricht.

Wenn die aktuelle Stellung des Bedienelements einer Antriebsstellung entspricht, können diese Schritte entfallen.

Gemäß einer Ausführungsform umfasst ein Schienenfahrzeug mindestens eine Nutzbremse, mindestens eine Reibungsbremse, ein Bedienelement über dessen Stellung eine Gesamtbremskraft für die mindestens eine Nutzbremse und die mindestens eine Reibungsbremse einstellbar ist, und eine mit dem Bedienelement verbundene Assistenzvorrichtung, die eingerichtet ist, eine gewünschten Stellung des Bedienelements zu bestimmen, bei der ein Bremskraftanteil der mindestens einen Nutzbremse für eine aktuelle Fahrgeschwindigkeit des Schienenfahrzeugs gemäß einer vorgegebenen Abhängigkeit des Bremskraftanteils der mindestens einen Nutzbremse an der Gesamtbremskraft von der Geschwindigkeit des Schienenfahrzeugs und der Stellung des Bedienelements einen maximalen Wert annimmt, wobei die Assistenzvorrichtung eingerichtet ist, die gewünschten Stellung und/oder ein mit der gewünschten Stellung korreliertes Signal an das Bedienelement weiterzuleiten, und/oder wobei die Assistenzvorrichtung eine Ausgabeeinheit zur Ausgabe der gewünschten Stellung und/oder einer mit der gewünschten Stellung korrelierten Größe aufweist.

Dabei kann die Stellung es Bedienelements linear mit der Gesamtbremskraft korreliert sein. Dies ermöglicht eine besonders intuitive Steuerbarkeit.

Die Gesamtbremskraft kann aber auch nichtlinear mit der Stellung des Bedienelements korreliert sein.

Außerdem kann die Gesamtbremskraft bei gegebener Stellung des Bedienelements für Werte der Gesamtbremskraft, die geringer als die maximale Gesamtbremskraft sind, von der aktuellen Geschwindigkeit des Schienenfahrzeugs (hierin auch als aktuelle Fahrzeuggeschwindigkeit bezeichnet) abhängen.

Das Bedienelement kann einen Fahrbremshebel, einen Fahrschalter oder einen Joystick aufweisen.

Außerdem kann das Bedienelements für eine elektronische Drive-by-Wire-Steuerung eingerichtet sein.

Weiterhin kann ein Verhalten des Fahrbremshebels, des Fahrschalters oder des Joysticks von der gewünschten Stellung und/oder dem mit der gewünschten Stellung korreliertem Signal abhängen.

Insbesondere kann das Bedienelement einen ansteuerbaren Aktuator, z.B. einen elektrischen oder pneumatischen Aktuator, und/oder einen ansteuerbaren Schwingungsanreger aufweisen, der eine von der aktuellen Stellung, von der gewünschten Stellung und/oder dem mit der gewünschten Stellung korreliertem Signal abhängende Gegenkraft und/oder Vibration eines Hebels oder Handgriffs des Bedienelements erzeugen kann.

Insbesondere kann vorgesehen sein, dass über den ansteuerbaren Aktuator die im Folgenden auch als optimale oder ideale Nutzbremsenstellung (des Bedienelements) bezeichnete (fahrzeuggeschwindigkeitsabhängige) gewünschte Stellung des Bedienelements, bei der der Bremskraftanteil der Nutzbremse(n) maximal (am größten) ist, (dem Fahrer) durch einen Widerstand des Bedienelements angezeigt wird. Dies kann beispielsweise analog wie beim 'Kick down' des Gaspedals eines PKW mit Automatikschaltung erfolgen.

Dies ermöglicht es dem Fahrer beim Bremsen (und damit bei sich verändernder Fahrzeuggeschwindigkeit) das Bedienelement einfach entlang der optimalen Nutzbremsenstellung zu führen.

Dabei kann vorgesehen sein, dass der Aktuator die Auslegung des Bedienelements entsprechend der aktuellen Fahrzeuggeschwindigkeit verändert. Dies wird typischerweise so realisiert, dass es jederzeit möglich ist, die durch den Aktuator vorgenommene Änderung/Auslenkung manuell zu übersteuern.

Außerdem kann vorgesehen sein, auch den Abstand der aktuellen Stellung des Bedienelements von der gewünschten Stellung (optimalen Nutzbremsenstellung) über einen ansteigenden bzw. abfallenden Widerstand bei der Bewegung des Bedienelements spürbar/fühlbar zu gestalten (anzuzeigen).

Weiterhin kann vorgesehen sein, ein Belohnungssystem für den Fahrer einzuführen, um ihn besonders zu motivieren, möglichst mit der optimalen Nutzbremsenstellung zu bremsen.

Alternativ oder ergänzend kann vorgesehen sein, die (fahrzeuggeschwindigkeitsabhängige) gewünschte Stellung und/oder den Abstand der aktuellen Stellung des Bedienelements von der gewünschten Stellung des Bedienelements über ein Vibrieren (für den Fahrer) haptisch spürbar/fühlbar zu gestalten.

Die Ausgabeeinheit kann eine Lichtquelle, einen Bildschirm, einen Schwingungsanreger und/oder einen Lautsprecher aufweisen.

Insbesondere kann vorgesehen sein, über die Ausgabeeinheit die gewünschte Stellung des Bedienelements und/oder den Abstand der aktuellen Stellung des Bedienelements von der gewünschten Stellung des Bedienelements anzuzeigen.

Beispielsweise kann vorgesehen sein, die gewünschte Stellung und/oder den Abstand der aktuellen Stellung des Bedienelements von der gewünschten Stellung akustisch, zum Beispiel mittels einer Tonhöhe und oder Lautstärke, oder optisch, zum Beispiel über eine Farbkodierung einer LED oder eine angezeigte geometrische Form, einen Balken bzw. ein Balkendiagramm, Punkte, Kreise und/oder Richtungen symbolisierende geometrische Elemente wie Pfeile oder Dreiecke auf dem Bildschirm anzuzeigen.

Außerdem kann die Assistenzvorrichtung in eine Steuer- und Assistenzeinheit des Schienenfahrzeugs integriert sein, die eingerichtet ist, die mindestens eine Nutzbremse mit einem Anteil an einer der aktuellen Stellung des Bedienelements entsprechenden aktuellen Gesamtbremskraft zu betreiben, der bei der aktuellen Geschwindigkeit des Schienenfahrzeugs der vorgegebenen Abhängigkeit des Bremskraftanteils der mindestens einen Nutzbremse entspricht, und die mindestens eine Reibungsbremse mit einem Anteil an der aktuellen Gesamtbremskraft zu betreiben, der bei der aktuellen Geschwindigkeit des Schienenfahrzeugs einer vorgegebenen Abhängigkeit des Bremskraftanteils der mindestens einen Reibungsbremse von der Geschwindigkeit des Schienenfahrzeugs und der Stellung des Bedienelements entspricht.

Das Schienenfahrzeug kann ein batteriegestütztes Schienenfahrzeug, insbesondere ein Batteriefahrzeug sein.

Typischerweise weist das Schienenfahrzeug ein Triebfahrzeug auf, z.B. einen Triebkopf oder ist als Triebfahrzeug ausgeführt, z.B. als Triebzug.

Außerdem kann das Schienenfahrzeug einen elektrischen Energiespeicher, insbesondere eine Traktionsbatterie, eine typischerweise mit dem elektrischen Energiespeicher verbundene elektrodynamische Bremse als die mindestens eine oder eine der mindestens einen Nutzbremse, und/oder eine generatorisch betreibare und typischerweise mit dem Energiespeicher verbundene Traktionsmaschine, die in einem generatorischen Betrieb als die mindestens eine oder eine der mindestens einen Nutzbremse einsetzbar ist, aufweisen.

Außerdem ist das Schienenfahrzeug, insbesondere die Assistenzvorrichtung und/oder die Steuer- und Assistenzeinheit des Schienenfahrzeugs typischerweise eingerichtet, die hierin beschriebenen Verfahren auszuführen.

Gemäß noch einer Ausführungsform weist ein Computerprogrammprodukt und/oder ein computerlesbarer Datenträger, zum Beispiel ein magnetisch, elektrisch oder optisch auslesbarer Datenträger, Programmbefehle auf, die geeignet sind, einen oder mehrere Prozessoren einer Schienenfahrzeugsteuerung, einer Assistenzvorrichtung und/oder einer Steuer- und Assistenzeinheit eines Schienenfahrzeugs, zu veranlassen, die hierin beschriebenen Verfahren auszuführen.

Die vorstehend beschriebenen Ausführungsformen können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen sowie Bezugszeichen, die sich nur in der ersten Ziffer voneinander unterscheiden, bezeichnen entsprechend ähnliche Teile.
Figur 1A zeigt eine jeweilige Abhängigkeit des Bremskraftanteils von Nutzbremsen und Reibungsbremsen an einer Gesamtbremskraft eines Schienenfahrzeugs in Prozent als Funktion der Geschwindigkeit des Schienenfahrzeugs.
Figur 1B zeigt eine gewünschte Stellung eines Bedienelements in Prozent als Funktion der Geschwindigkeit des Schienenfahrzeugs gemäß einem Ausführungsbeispiel.
Figur 1C zeigt eine Gesamtbremskraft eines Schienenfahrzeugs in Prozent als Funktion der Geschwindigkeit des Schienenfahrzeugs für verschiedene Stellungen eines Bedienelements gemäß einem Ausführungsbeispiel mit nichtproportionaler Abhängigkeit der Gesamtbremskraft von der Stellung des Bedienelements.
Figur 2A zeigt eine schematische Darstellung eines Schienenfahrzeugs gemäß einem Ausführungsbeispiel.
Figur 2B zeigt eine schematische Darstellung eines Schienenfahrzeugs gemäß einem Ausführungsbeispiel.
Figur 2C zeigt eine schematische Darstellung eines Schienenfahrzeugs gemäß einem Ausführungsbeispiel.
Figur 3A zeigt eine schematische Darstellung einer Anzeige eines Schienenfahrzeugs gemäß einem Ausführungsbeispiel.
Figur 3B zeigt ein Blockdiagramm eines Verfahrens zur Assistenz bei der Steuerung einer Geschwindigkeit eines Schienenfahrzeugs gemäß einem Ausführungsbeispiel.
Figur 3C zeigt ein Blockdiagramm eines Verfahrens zum assistierten Steuern einer Geschwindigkeit eines Schienenfahrzeugs gemäß einem Ausführungsbeispiel.

### Ausführungsbeispiele

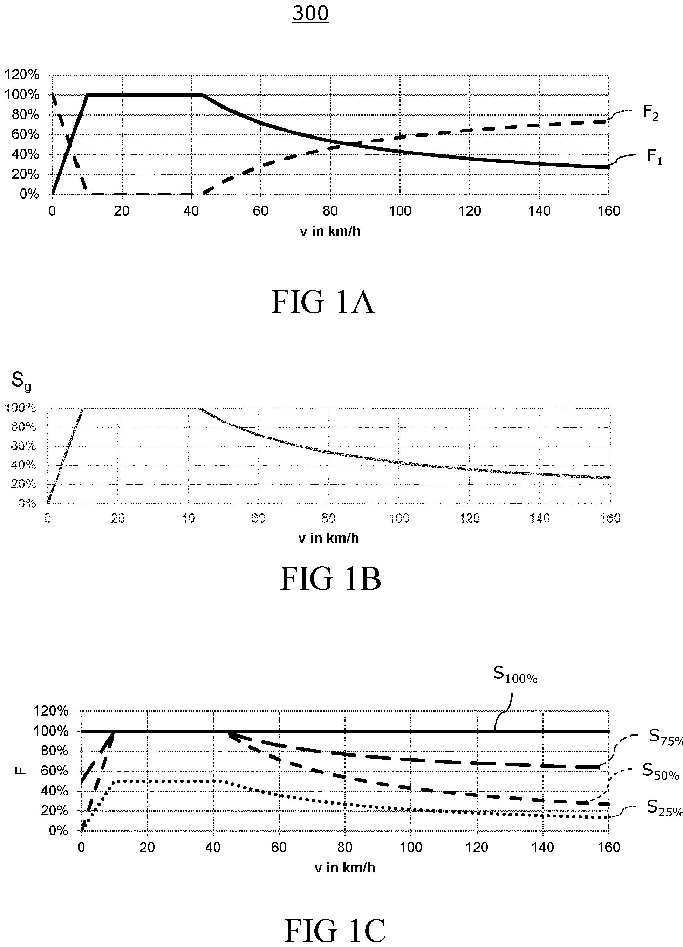

Figur 1A zeigt eine jeweilige vorgegebene Abhängigkeit des prozentualen Bremskraftanteils F₁ der Nutzbremse(n) eines exemplarischen Schienenfahrzeugs und des prozentualen Bremskraftanteils F₂ der Reibungsbremse(n) des Schienenfahrzeugs an einer Gesamtbremskraft des Schienenfahrzeugs als Funktion der Geschwindigkeit v des Schienenfahrzeugs. Hierzu wird angemerkt, dass auf Grund der typischerweise vorhandenen Leistungsbegrenzung der Nutzbremse(n) der Einsatz der Reibungsbremse(n) insbesondere bei hohen Fahrzeuggeschwindigkeiten v zum Bremsen erforderlich sein kann.

Figur 1B zeigt die gewünschte Stellung S_{g} eines Bedienelements des Schienenfahrzeugs in Prozent, bei der der Bremskraftanteil der Nutzbremsen gemäß der in Fig. 1A dargestellten Abhängigkeit F₁(v)=F- F₂(v) (bzw. 100% - F₂(v)) als Funktion der Geschwindigkeit v des Schienenfahrzeugs den jeweils größten Wert annimmt, wenn von einer häufig eingesetzten linearen Abhängigkeit (F~S) zwischen der Gesamtbremskraft F der Schienenfahrzeugs und der Stellung S des Bedienelements (im Bremsbereich) ausgegangen wird.

Mit anderen Worten, Fig. 1B zeigt die ideale Nutzbremsenstellung S_{g} des Bedienelements, z.B. eine ideale Stellung bzw. Auslenkung eines (Fahr-)Bremshebels für das maximal mögliche Ausnutzen der Nutzbremsen als Funktion der Fahrzeuggeschwindigkeit v. Insbesondere ist gut zu erkennen, dass sich die aus Energiesicht ideale Stellung des (Fahr-)Bremshebels mit der Geschwindigkeit v ändert. Außerdem wird anhand von Fig. 1B deutlich, dass es ohne ein entsprechendes Assistenzsystem sehr schwierig ist bzw. sehr viel Erfahrung des Fahrers erfordert, die Nutzbremse(n) aus energetischer Sicht bestmöglich auszunutzen.

Gemäß Ausführungsformen kann der Fahrer beim Bremsen durch ein haptisches, ein akustisches und/oder ein optisches Signal die ideale Nutzbremsenstellung S_{g} und/oder ein Abstand zur idealen Nutzbremsenstellung S_{g} angezeigt, zur ideale Nutzbremsenstellung S_{g} hin geführt und/oder bei sich verändernder Fahrzeuggeschwindigkeit zur und/oder entlang der idealen Nutzbremsenstellung S_{g} geführt werden.

Eine optische oder akustische Umsetzung ist vergleichsweise einfach realisierbar.

Eine haptische Umsetzung, z.B. über ein Vibrieren des Bedienelements oder eines Teils davon, beispielsweise eines Fahrbremshebels, oder eines zusätzlichen Elements wie zum Beispiel eines Armbandes für den Fahrer kann zwar etwas aufwendiger sein, ist aber sehr intuitiv realisierbar. Außerdem hat die haptische Umsetzung den Vorteil, dass der Fahrer nicht so leicht abgelenkt werden kann, wie das etwa bei einer optischen Umsetzung aufgrund der parallel zu beobachten Kontrollelemente/Signalelemente und des Gleisbettes der Fall sein kann.

Dies gilt auch für eine haptische Umsetzung bei der das Bedienelement bzw. der Fahrbremshebel mit einem Aktuator ausgestattet wird, der analog wie der 'Kick down' des Gaspedals eines PKW mit Automatikschaltung durch einen Widerstand die fahrzeuggeschwindigkeitsabhängige ideale Nutzbremsenstellung anzeigt. Dadurch kann der Fahrer bei sich ändernder Geschwindigkeit des Schienenfahrzeugs einfach an der idealen Nutzbremsenstellung entlangfahren.

Dabei kann es vorteilhaft ist, wenn der Aktuator die Auslegung des Bedienelements bzw. Fahrbremshebels verändern kann. In diesen Ausführungsformen sollte es für den Fahrer typischerweise aber jederzeit möglich sein, die durch den Aktuator vorgenommene Auslenkung manuell zu übersteuern.

Da aus energetischer Sicht möglichst nur mit der bzw. den Nutzbremsen gebremst werden sollte, kann es zudem günstig sein, wenn das Bedienelement so ausgeführt wird, dass in einem unteren Bereich der Stellung nur mit der bzw. den Nutzbremse(n) gebremst wird und die ideale Nutzbremsenstellung unabhängig von der Fahrzeuggeschwindigkeit ist. Dies kann aber dazu führen, dass die Gesamtbremskraft nicht mehr linear von der Stellung des Bedienelements abhängt.

Dies wird in Figur 1C, die eine Gesamtbremskraft F eines Schienenfahrzeugs in Prozent als Funktion der Geschwindigkeit des Schienenfahrzeugs für verschiedene Stellungen bzw. Auslenkungen S eines Fahrbremshebels im Bremsbetrieb in Prozent zeigt, exemplarisch verdeutlicht wird.

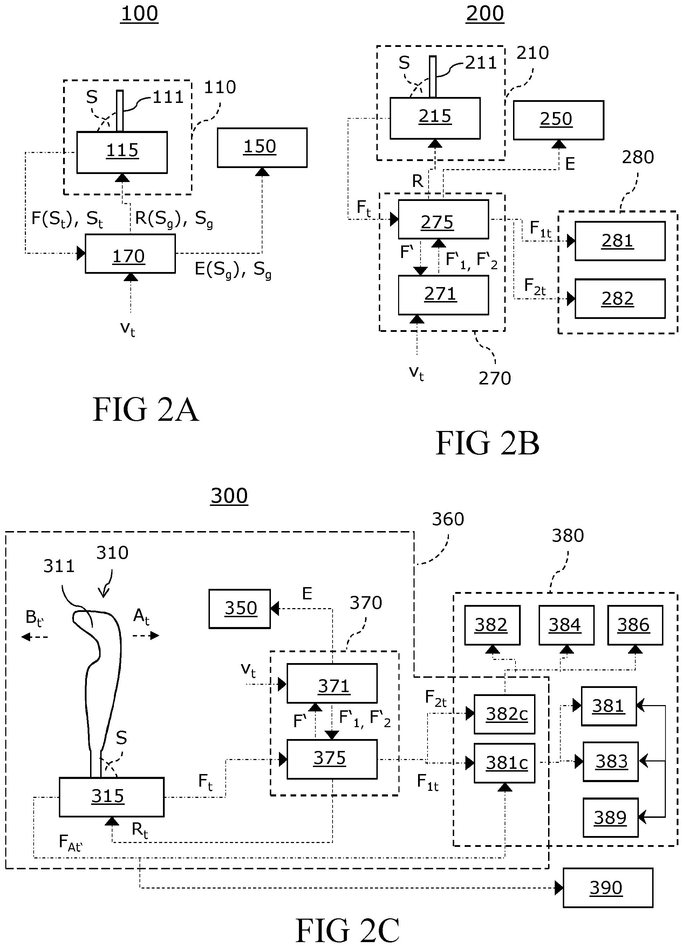

Figur 2A zeigt in einer schematischen Darstellung Teile einer Steuerung eines Schienenfahrzeugs 100. In dem exemplarischen Ausführungsbeispiel umfasst die Steuerung ein Bedienelement 110 für einen Führer des Schienenfahrzeug 100, eine mit dem Bedienelement 110 verbundene Assistenzvorrichtung 170, und eine mit der Assistenzvorrichtung 170 verbundene Ausgabeeinheit 150 zur Ausgabe einer gewünschten Stellung S_{g} und/oder einer mit der gewünschten Stellung S_{g} korrelierten Größe E(S_{g}), die auch Teil Assistenzvorrichtung 170 sein kann.

Wie in Figur 2A dargestellt wird, kann das Bedienelement 110 einen Hebel 111, der typischerweise als Bremshebel, noch typischer als Fahrbremshebel des Bedienelements 110 ausgeführt ist und eine Signalgeber- bzw. Reglereinheit 115 aufweisen. Dabei dient die Einheit 115 typischerweise zumindest zum Bestimmen der Stellung S des Hebels 111 relativ zur Einheit 115 bzw. relativ zum Gehäuse der Einheit 115.

Die Einheit 115 kann die bestimmte Stellung S oder sogar die daraus bestimmte Gesamtbremskraft F(S) des Schienenfahrzeugs 100 an die Assistenzvorrichtung 170 übermitteln. Dies wird in Figur 2A durch den Strichpunktpfeil zwischen der Einheit 115 und der Assistenzvorrichtung 170 dargestellt.

Aus der zu einem bestimmten Zeitpunkt t übermittelten aktuellen Stellung St bzw. der daraus ermittelten Gesamtbremskraft F (S) und einer an die Assistenzeinheit 170 ebenfalls übermittelten aktuellen Fahrzeuggeschwindigkeit vₜ kann die Assistenzeinheit 170 die korrespondierende ideale (aktuelle) Nutzbremsenstellung S_{g} bestimmen, typischerweise berechnen.

Außerdem kann die Assistenzeinheit 170 die ideale (aktuelle) Nutzbremsenstellung S_{g} oder eine damit korrelierte Größe E(S_{g}) an die Ausgabeeinheit 150 für eine typischerweise aufbereitete Ausgabe zur Unterstützung des Fahrers beim Bremsen weiterleiten und/oder die ideale (aktuelle) Nutzbremsenstellung S_{g} oder ein damit korreliertes Signal R(S_{g}) an die Einheit 115 zur Änderung eines Verhaltens des Hebels 111 beim Bedienen durch den Fahrer weiterleiten.

Dabei kann vorgesehen sein, dass durch das korrelierte Signal R(S_{g}) und/oder die korrelierte Größe E(S_{g}) eine Verzögerungszeit der Reaktion des Fahrers berücksichtigt wird. Dies kann beispielsweise mittels eines trainierten neuronalen Netzes und/oder fahrerspezifisch erfolgen.

Figur 2B zeigt in einer schematischen Darstellung Teile einer Steuerung eines Schienenfahrzeugs 200. In dem exemplarischen Ausführungsbeispiel umfasst die Steuerung ein Bedienelement 210 für einen Führer des Schienenfahrzeug 200, das dem Bedienelement 110 aus Figur 2A entsprechen kann, eine mit dem Bedienelement 210 verbundene Assistenzvorrichtung 270, und eine mit der Assistenzvorrichtung 270 verbundene Ausgabeeinheit 250 zur Ausgabe einer gewünschten Stellung und/oder einer mit der gewünschten Stellung korrelierten Größe E.

In dem in Figur 2B dargestellten exemplarischen Ausführungsbeispiel weist die Assistenzvorrichtung 270 ein Berechnungsmodul (Berechnungseinheit) 271 und ein mit dem Berechnungsmodul 271 verbundenes Steuermodul (Steuereinheit) 275 auf.

Das Berechnungsmodul 271 dient der Berechnung einer typischerweise fahrzeugspezifischen vorgegebenen jeweiligen Abhängigkeit F₁(v, F(S), F₂(v, F(S)) des Bremskraftanteils F'₁ der Nutzbremse(n) und des Bremskraftanteils F'₂ der Reibungsbremse(n) von der aktuellen Geschwindigkeit vₜ des Schienenfahrzeugs 200 bei gegebener Stellung des Bedienelements bzw. Gesamtbremskraft F'.

Wie in Figur 2B dargestellt wird, kann das Steuermodul 275 für eine aktuelle Gesamtbremskraft Fₜ über das Berechnungsmodul 271 die aktuellen Bremskraftanteile F₁ₜ und F₂ₜ für die Nutzbremse 281 und die Reibungsbremse 282 eines Bremssystems 280 des Schienenfahrzeugs 200 bestimmen lassen und an diese weiterleiten.

Außerdem ist das Steuermodul 275 wie dargestellt typischerweise eingerichtet, beispielsweise über eine Variation der an das Berechnungsmodul 271 übermittelten Gesamtbremskraft F' und die vom Berechnungsmodul 271 zurück übermittelten Bremskraftanteile F'₁, F'₂ die ideale (aktuelle) Nutzbremsenstellung S_{g} zu bestimmen und diese bzw. daraus abgeleitete Größen/Signale E, R wie dargestellt an die Ausgabeeinheit 250 bzw. das Bedienelement 210 weiterzuleiten.

Figur 2C zeigt in einer schematischen Darstellung Teile einer Steuerung eines Schienenfahrzeugs 300. In dem exemplarischen Ausführungsbeispiel umfasst die Steuerung ebenfalls ein Bedienelement 310 für einen Führer des Schienenfahrzeug 300, eine mit dem Bedienelement 310 verbundene Assistenzvorrichtung 370, die ähnlich oder sogar identisch wie die Assistenzvorrichtung 270 aufgebaut sein kann, und eine mit der Assistenzvorrichtung 370 verbundene Ausgabeeinheit 350 zur Ausgabe einer gewünschten Stellung und/oder einer mit der gewünschten Stellung korrelierten Größe E.

In dem in Figur 2C dargestellten exemplarischen Ausführungsbeispiel ist der Fahrbremshebel 311 in der Art eines Joysticks ausgeführt, dessen Stellung S bezüglich der Reglereinheit 315 durch Bewegung in die Richtungen A, B geändert werden kann.

Dabei soll in dem Ausführungsbeispiel in Figur 2C durch die Indizierung der Richtung B mit der Zeit t' dargestellt werden, dass zum Zeitpunkt t' die Stellung S einem Antriebsbetrieb des Schienenfahrzeug 300 entspricht (S>90°), und durch die Indizierung der Richtung A mit der Zeit t dargestellt werden, dass zum Zeitpunkt t die Stellung S einem Bremsbetrieb des Schienenfahrzeugs 300 entspricht (S<90°), in dem die Einheit 315 eine der aktuellen Stellung entsprechende aktuelle Gesamtbremskraft Fₜ (oder eine damit korrelierte Größe) an das Steuermodul 375 weiterleitet.

Im Antriebsbetrieb (Traktionsbetrieb) kann vorgesehen sein, dass von der Einheit 315 eine Antriebskraft F_{At'} für den jeweiligen Zeitpunkt t' oder eine damit korrelierte Größe bestimmt wird und diese an eine Traktionsmaschine 390 des Schienenfahrzeug 300 weitergeleitet wird. In dieser Ausführungsform ist die Traktionsmaschine typischerweise eine Traktionsmaschine, die nicht zum Rückspeisen elektrischer Energie beim Bremsen verwendet wird, zum Beispiel eine nicht-elektrische Traktionsmaschine.

Alternativ oder ergänzend kann das Schienenfahrzeug 300 aber auch eine oder mehrere elektrische Traktionsmaschinen 381, 383 aufweisen, die in einem generatorischen Betrieb als Nutzbremse einsetzbar sind.

Je nach Fahrzeugtyp kann dabei vorgesehen sein, dass die elektrische Traktionsmaschine(n) und/oder elektrodynamischen Bremsen 381, 383 mit einem elektrischen Energiespeicher 389, insbesondere einer Traktionsbatterie verbunden sind, was in Figur 2C durch die durchgezogenen Pfeile dargestellt wird.

Wie in Figur 2C weiter dargestellt wird, kann das Schienenfahrzeug 300 bzw. das Brems- und Antriebssystem 380 je nach Fahrzeugtyp und/oder Fahrzeuglänge mehrere Reibungsbremsen 382, 384, 386 aufweisen, die anteilsmäßig zum aktuellen Reibungsbremsenbremskraftanteil F₂ₜ beitragen. Zum anteilsmäßigen Aufteilen des aktuellen Reibungsbremsenbremskraftanteil F₂ₜ kann zudem ein separates Modul 382c verwendet werden.

Wie bereits oben erläutert wurde, kann das Schienenfahrzeug 300 bzw. das Brems- und Antriebssystem 380 je nach Fahrzeugtyp und/oder Fahrzeuglänge auch mehrere Nutzbremsen 381, 383 aufweisen, die anteilsmäßig zum aktuellen Reibungsbremsenbremskraftanteil F₂ₜ beitragen. Zum anteilsmäßigen Aufteilen des aktuellen Reibungsbremsenbremskraftanteil F₂ₜ kann ebenfalls ein separates Modul 381c verwendet werden, dass auch dazu verwendet werden kann, im Traktionsbetrieb die aktuelle Antriebskraft F_{At'} aufzuteilen, sofern mehrere entsprechende Traktionsmaschinen im Schienenfahrzeug 300 vorhanden sind.

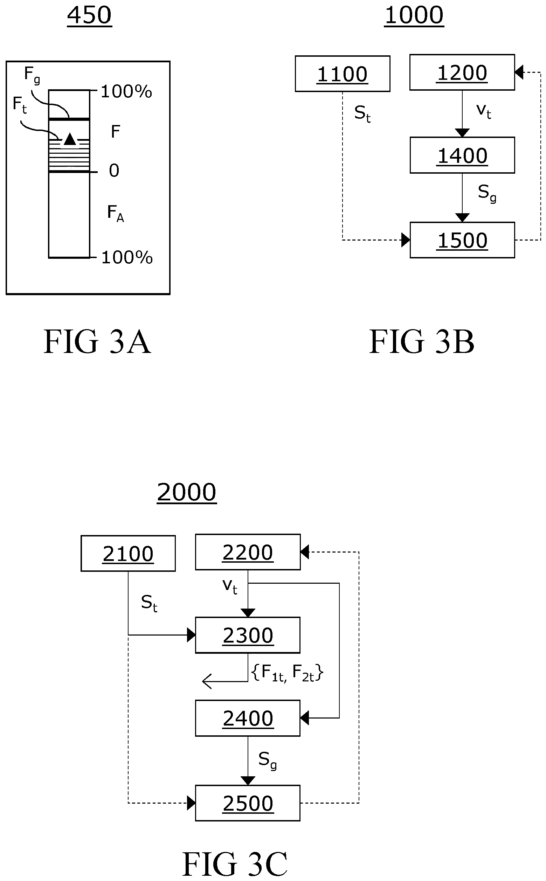

Figur 3A zeigt eine schematische Darstellung einer Anzeige 450, die in den oben mit Bezug zu den Figuren 2A bis 2C erläuterten Schienenfahrzeugen 100-300 als Anzeige bzw. optische Ausgabe verwendet werden kann.

In dem exemplarischen Ausführungsbeispiel von Figur 3A wird die über einen typischerweise als Fahrbremshebel ausgeführtes Bedienelement einstellbare bzw. eingestellte Antriebskraft F_{A} und (Gesamt-) Bremskraft F des Schienenfahrzeugs in einem Balkendiagramm dargestellt.

Dabei kann vorgesehen sehen sein, dass neben der in der Balkenhöhe kodierten aktuellen (Gesamt-) Bremskraft Fₜ zumindest im Bremsbetrieb die (geschwindigkeitsabhängige) gewünschte (Gesamt-) Bremskraft F_{g} dargestellt wird.

Außerdem kann vorgesehen sein, dem Fahrer durch ein zusätzliches Symbol, beispielsweise das in Figur 3A dargestellte Dreieck zusätzlich die Richtung der zu ändernden Fahrbremshebelstellung anzuzeigen, sofern die aktuellen Bremskraft Fₜ und die gewünschte Bremskraft F_{g} voneinander abweichen.

Figur 3B zeigt ein Blockdiagramm eines Verfahrens 1000 zur Assistenz bei der Steuerung einer Geschwindigkeit eines Schienenfahrzeugs mit einer oder mehreren Nutzbremsen und einer oder mehreren Reibungsbremsen wie es oben mit Bezug zu den Figuren 2A bis 3A erläutert wurde.

In einem Block 1200 wird zunächst eine aktuelle Fahrgeschwindigkeit vₜ des Schienenfahrzeugs bestimmt, zum Beispiel gemessen.

In einem weiteren Block 1400 wird für die bestimmte aktuelle Fahrgeschwindigkeit vₜ eine gewünschten Stellung S_{g} eines Bedienelements zur Einstellung einer Gesamtbremskraft des Schienenfahrzeug bestimmt, typischerweise berechnet, bei der ein Bremskraftanteil der Nutzbremse(n) gemäß einer vorgegebenen Abhängigkeit des Bremskraftanteils der Nutzbremse(n) an der Gesamtbremskraft (F) einen maximalen Wert annimmt.

In einem weiteren Block 1500 wird die gewünschte Stellung des Bedienelements zur Ausgabe einer sich auf die Stellung des Bedienelements beziehenden Empfehlung an einen Führer des Schienenfahrzeugs und/oder zum Steuern eines Verhaltens des Bedienelements verwendet.

Wie in Figur 3B durch den linken gestrichelten Pfeil dargestellt wird, kann in einem Block 1100 zudem eine aktuelle Stellung St des Bedienelements bestimmt werden und bei der Bestimmung bzw. Ausgabe der Empfehlung im Block 1500 berücksichtigt werden.

Wie in Figur 3B durch den rechten gestrichelten Pfeil dargestellt wird, werden die Blöcke während des Bremsens typischerweise mehrfach wiederholt.

Figur 3C zeigt ein Blockdiagramm eines Verfahrens 2000 zum assistierten Steuern einer Geschwindigkeit eines Schienenfahrzeugs mit einer oder mehreren Nutzbremsen und einer oder mehreren Reibungsbremsen wie es oben mit Bezug zu den Figuren 2A bis 3A erläutert wurde.

In Blöcken 2100, 2200 werden zunächst eine aktuelle Stellung St eines Bedienelements zur Einstellung einer Gesamtbremskraft des Schienenfahrzeugs sowie eine aktuelle Fahrgeschwindigkeit vₜ des Schienenfahrzeugs bestimmt, zum Beispiel gemessen.

In einem weiteren Block 2300 wird die aktuelle Stellung St und die aktuelle Fahrgeschwindigkeit vₜ zum Bestimmen, typischerweise zum Berechnen eines aktuellen Bremskraftanteils F₁ₜ der Nutzbremse(n) an einer aktuellen Gesamtbremskraft des Schienenfahrzeugs und eines aktuellen Bremskraftanteils F₂ₜ der Reibungsbremse(n) an der aktuellen Gesamtbremskraft gemäß einer jeweiligen vorgegebenen Abhängigkeit der jeweiligen Bremskraftanteile als Funktion der Geschwindigkeit des Schienenfahrzeugs und der Stellung S des Bedienelements verwendet.

Wie in Figur 3C dargestellt wird, werden, die in Block 2300 bestimmten aktuellen Bremskraftanteile F₁ₜ, F₁ₜ typischerweise ausgegeben bzw. zum Betrieb der Nutzbremse(n) und Reibungsbremse(n) verwendet.

In einem weiteren Block 2400, der auch zeitgleich oder nahezu zeitgleich mit dem Block 2200 ausgeführt werden kann, wird für die bestimmte aktuelle Fahrgeschwindigkeit vₜ eine gewünschten Stellung S_{g} eines Bedienelements zur Einstellung einer Gesamtbremskraft des Schienenfahrzeug bestimmt, typischerweise berechnet, bei der ein Bremskraftanteil der Nutzbremse(n) gemäß der vorgegebenen Abhängigkeit des Bremskraftanteils der Nutzbremse(n) an der Gesamtbremskraft (F) einen maximalen Wert annimmt.

Schließlich kann in einem weiteren Block 2500 die gewünschte Stellung des Bedienelements zur Ausgabe einer sich auf die Stellung des Bedienelements beziehenden Empfehlung an einen Führer des Schienenfahrzeugs und/oder zum Steuern eines Verhaltens des Bedienelements verwendet werden.

Wie in Figur 3C durch den linken gestrichelten Pfeil dargestellt wird, kann die aktuelle Stellung St des Bedienelements auch bei der Bestimmung bzw. Ausgabe der Empfehlung im Block 2500 berücksichtigt werden.

Wie in Figur 3C durch den rechten gestrichelten Pfeil dargestellt wird, können die dargestellten Blöcke beim Bremsen ebenfalls mehrfach wiederholt werden.

### Bezugszeichenliste

- 110, 210, 310: Bedienelement / Befehlsgeber zur Gesamtbremskrafteinstellung /-auswahl
- 111, 211, 311: (Fahrbrems-) Hebel, Handgriff des Bedienelements
- 115, 215, 315: Signalgeber-, Reglereinheit
- 150, 250, 350, 450: Anzeige /Display
- 170, 270, 370: Assistenzvorrichtung / -modul
- 271, 371: Berechnungsmodul / -einheit zur Berechnung einer vorgegebenen Abhängigkeit (F₁(v, F(S)), F₂(v, F(S))) des Bremskraftanteils (F₁) der Nutzbremse(n) und des Bremskraftanteils (F₂) der Reibungsbremse(n) von der Geschwindigkeit des Schienenfahrzeugs und der Stellung des Bedienelements
- 275, 375: Steuermodul / -einheit
- 180, 280, 380: Bremssystem / Brems- und Antriebssystem
- 181, 281, 381, 383: Nutzbremse
- 182, 282, 382, 384, 386: Reibungsbremse
- 360: Steuer- und Assistenzeinheit / -vorrichtung
- 383: generatorisch betreibbareTraktionsmaschine
- 389: elektrischen Energiespeicher/Traktionsbatterie
- 390: (nicht-elektrische) Traktionsmaschine
- 100-300: Schienenfahrzeug
- 1000 - 2500: Verfahren, Verfahrensschritte
- A, B: Richtung
- F: Gesamtbremskraft
- Fₜ: aktuelle Gesamtbremskraft
- S: Stellung des Bedienelements
- Sₜ: aktuellen Stellung des Bedienelements

## Patentansprüche

1. Verfahren (1000) zur Assistenz bei der Steuerung einer Geschwindigkeit (v) eines Schienenfahrzeugs (100, 200, 300) aufweisend mindestens eine Nutzbremse (181, 281, 381, 383), mindestens eine Reibungsbremse (182, 282, 382, 384, 386), und ein Bedienelement (110, 210, 310), über das eine auf die mindestens eine Nutzbremse (181, 281, 381, 383) und die mindestens eine Reibungsbremse (182, 282, 382, 384, 386) aufteilbare Gesamtbremskraft (F) einstellbar ist, wobei das Verfahren die folgenden Schritte aufweist:
- Bestimmen (1200) einer aktuellen Fahrgeschwindigkeit (vₜ) des Schienenfahrzeugs (100, 200, 300);
- Bestimmen (1400) einer gewünschten Stellung (S_{g}) des Bedienelements (110, 210, 310) bei der ein Bremskraftanteil (F₁) der mindestens einen Nutzbremse (181, 281, 381, 383) für die aktuelle Fahrgeschwindigkeit (vₜ) gemäß einer vorgegebenen Abhängigkeit (F₁(v, F(S))) des Bremskraftanteils (F₁) der mindestens einen Nutzbremse (181, 281, 381, 383) an der Gesamtbremskraft (F) von der Geschwindigkeit (v) des Schienenfahrzeugs (100, 200, 300) und der Stellung (S) des Bedienelements (110, 210, 310) einen maximalen Wert annimmt; und
- Verwenden (1500) der gewünschten Stellung (S_{g}) des Bedienelements (110, 210, 310) zur Ausgabe einer sich auf die Stellung (S) des Bedienelements (110, 210, 310) beziehenden Empfehlung (E) an einen Führer des Schienenfahrzeugs und/oder zum Steuern eines Verhaltens des Bedienelements (110, 210, 310).

2. Verfahren (1000) nach Anspruch 1, wobei das Verfahren ein Bestimmen (1100) einer aktuellen Stellung (Sₜ) des Bedienelements (110, 210, 310) aufweist, wobei die aktuelle Stellung (St) des Bedienelements (110, 210, 310) zur Ausgabe der Empfehlung (E), zum Bestimmen der auszugebenden Empfehlung und/oder zum Steuern des Verhaltens des Bedienelements (110, 210, 310) verwendet wird, und/oder wobei eine Abweichung der aktuellen Stellung (St) von der gewünschten Stellung (S_{g}) des Bedienelements (110, 210, 310) zur Bestimmung der Empfehlung (E) und/oder zum Steuern eines Verhaltens des Bedienelements (110, 210, 310) verwendet wird.

3. Verfahren (2000) zum assistierten Steuern einer Geschwindigkeit (v) eines Schienenfahrzeugs (100, 200, 300) aufweisend mindestens eine Nutzbremse (181, 281, 381, 383), mindestens eine Reibungsbremse (182, 282, 382, 384, 386), und ein Bedienelement (110, 210, 310), über das eine Gesamtbremskraft (F) der mindestens einen Nutzbremse (181, 281, 381, 383) und der mindestens einen Reibungsbremse (182, 282, 382, 384, 386) einstellbar ist, wobei das Verfahren die folgenden Schritte aufweist:
- Bestimmen (2100) einer aktuellen Stellung (St) des Bedienelements (110, 210, 310);
- Bestimmen (2200) einer aktuellen Fahrgeschwindigkeit (vₜ) des Schienenfahrzeugs (100, 200, 300);
- Verwenden (2300) der aktuellen Stellung (St) des Bedienelements (110, 210, 310) und der aktuellen Fahrgeschwindigkeit (vₜ) zum Bestimmen eines aktuellen Bremskraftanteils (F₁ₜ) der mindestens einen Nutzbremse (181, 281, 381, 383) an einer der aktuellen Stellung (St) entsprechenden aktuellen Gesamtbremskraft (Fₜ) des Schienenfahrzeugs (100, 200, 300) und eines aktuellen Bremskraftanteils (F₂ₜ) der mindestens einen Reibungsbremse (182, 282, 382, 384, 386) an der aktuellen Gesamtbremskraft (Fₜ) gemäß einer jeweiligen vorgegebenen Abhängigkeit (F₁(v, F(S)), F₂(v, F(S))) des Bremskraftanteils (F₁) der mindestens einen Nutzbremse (181, 281, 381, 383) und des Bremskraftanteils (F₂) der mindestens einen Reibungsbremse (182, 282, 382, 384, 386) von der Geschwindigkeit (v) des Schienenfahrzeugs (100, 200, 300) und der Stellung (S) des Bedienelements (110, 210, 310);
- Bestimmen (2400) einer gewünschten Stellung (S_{g}) des Bedienelements (110, 210, 310) bei der der Bremskraftanteil (F₁) der mindestens einen Nutzbremse (181, 281, 381, 383) für die aktuelle Fahrgeschwindigkeit (vₜ) gemäß der vorgegebenen Abhängigkeit (F₁(v, F(S))) des Bremskraftanteils (F₁) der mindestens einen Nutzbremse (181, 281, 381, 383) von der Geschwindigkeit (v) des Schienenfahrzeugs (100, 200, 300) und der Stellung (S) des Bedienelements (110, 210, 310) einen maximalen Wert annimmt; und
- Verwenden (2500) der gewünschten Stellung (S_{g}) des Bedienelements (110, 210, 310) zur Ausgabe einer sich auf die Stellung (S) des Bedienelements (110, 210, 310) beziehenden Empfehlung (E) an einen Führer des Schienenfahrzeugs und/oder zum Steuern eines Verhaltens des Bedienelements (110, 210, 310).

4. Verfahren (1000) nach Anspruch 3, wobei beim Verwenden (2500) der gewünschten Stellung (S_{g}) die aktuelle Stellung (Sₜ) des Bedienelements (110, 210, 310) und/oder eine Abweichung der aktuellen Stellung (St) des Bedienelements (110, 210, 310) von der gewünschten Stellung (S_{g}) des Bedienelements (110, 210, 310) berücksichtigt wird.

5. Verfahren (1000, 2000) nach einem der vorhergehenden Ansprüche, wobei die Ausgabe akustisch, optisch und/oder haptisch erfolgt.

6. Verfahren (1000, 2000) nach einem der vorhergehenden Ansprüche, wobei das Verfahren mehrfach ausgeführt wird.

7. Verfahren (1000, 2000) nach einem der vorhergehenden Ansprüche, wobei das Verfahren während eines Bremsvorgangs des Schienenfahrzeugs ausgeführt wird.

8. Verfahren (1000, 2000) nach einem der vorhergehenden Ansprüche, wobei das Bestimmen (1400, 2400) der gewünschten Stellung (S_{g}) des Bedienelements (110, 210, 310) und/oder das Verwenden (1500, 2500) der gewünschten Stellung (S_{g}) nur dann ausgeführt wird, wenn die aktuellen Fahrgeschwindigkeit (vₜ) größer oder gleich als ein vorgegebener Schwellenwert ist.

9. Schienenfahrzeug (100-300), aufweisend:
- mindestens eine Nutzbremse (181, 281, 381, 383);
- mindestens eine Reibungsbremse (182, 282, 382, 384, 386);
- ein Bedienelement (110, 210, 310) über dessen Stellung (S) eine Gesamtbremskraft (F) für die mindestens eine Nutzbremse (181, 281, 381, 383) und die mindestens eine Reibungsbremse (182, 282, 382, 384, 386) einstellbar ist; und
- eine mit dem Bedienelement (110, 210, 310) verbundene Assistenzvorrichtung (170, 270, 370), die eingerichtet ist, eine gewünschten Stellung (S_{g}) des Bedienelements (110, 210, 310) zu bestimmen, bei der ein Bremskraftanteil (F₁) der mindestens einen Nutzbremse (181, 281, 381, 383) für eine aktuelle Fahrgeschwindigkeit (vₜ) des Schienenfahrzeugs gemäß einer vorgegebenen Abhängigkeit (F₁(v, F(S))) des Bremskraftanteils (F₁) der mindestens einen Nutzbremse (181, 281, 381, 383) an der Gesamtbremskraft (F) von der Geschwindigkeit (v) des Schienenfahrzeugs (100, 200, 300) und der Stellung (S) des Bedienelements (110, 210, 310) einen maximalen Wert annimmt, wobei die Assistenzvorrichtung (170, 270, 370) eingerichtet ist, die gewünschten Stellung (S_{g}) und/oder ein mit der gewünschten Stellung (S_{g}) korreliertes Signal (R) an das Bedienelement (110, 210, 310) weiterzuleiten, und/oder wobei die Assistenzvorrichtung (170, 270, 370) eine Ausgabeeinheit (150) zur Ausgabe der gewünschten Stellung (S_{g}) und/oder einer mit der gewünschten Stellung (S_{g}) korrelierten Größe (E(S_{g})) aufweist.

10. Schienenfahrzeug (100-300) nach Anspruch 9, wobei die Stellung (S) des Bedienelements (110, 210, 310) linear oder nichtlinear mit der Gesamtbremskraft korreliert ist, wobei das Bedienelement (110, 210, 310) einen Fahrbremshebel (111, 211, 311), einen Fahrschalter oder einen Joystick (311) aufweist und/oder für eine elektronische Drive-by-Wire-Steuerung eingerichtet ist, wobei ein Verhalten des Fahrbremshebels, des Fahrschalters oder des Joysticks von der gewünschten Stellung (S_{g}) und/oder dem mit der gewünschten Stellung (S_{g}) korreliertem Signal (R) abhängt, und/oder wobei das Bedienelement (110, 210, 310) einen ansteuerbarer Aktuator aufweist, der eine von der Stellung (S), von der gewünschten Stellung (S_{g}) und/oder dem mit der gewünschten Stellung (S_{g}) korreliertem Signal (R) abhängende Gegenkraft erzeugen kann.

11. Schienenfahrzeug (100-300) nach Anspruch 9 oder 10, wobei die Ausgabeeinheit eine Lichtquelle, einen Bildschirm (450), einen Schwingungsanreger und/oder einen Lautsprecher aufweist.

12. Schienenfahrzeug (100-300) nach einem der Ansprüche 9 bis 11, wobei die Assistenzvorrichtung (170, 270, 370) in eine Steuer- und Assistenzeinheit (360) integriert ist, die eingerichtet ist, die mindestens eine Nutzbremse (181, 281, 381, 383) mit einem Anteil an einer einer aktuellen Stellung (Sₜ) des Bedienelements (110, 210, 310) entsprechenden aktuellen Gesamtbremskraft (Fₜ) zu betreiben, der bei einer aktuellen Geschwindigkeit (vₜ) des Schienenfahrzeugs der vorgegebenen Abhängigkeit (F₁(v, F(S))) des Bremskraftanteils (F₁) der mindestens einen Nutzbremse (181, 281, 381, 383) entspricht, und die mindestens eine Reibungsbremse (182, 282, 382, 384, 386) mit einem Anteil an der aktuellen Gesamtbremskraft (Fₜ) zu betreiben, der bei der aktuellen Geschwindigkeit (vₜ) des Schienenfahrzeugs einer vorgegebenen Abhängigkeit (F₂(v, F(S))) des Bremskraftanteils (F₂) der mindestens einen Reibungsbremse (182, 282, 382, 384, 386) von der Geschwindigkeit (v) des Schienenfahrzeugs (100, 200, 300) und der Stellung (S) des Bedienelements (110, 210, 310) entspricht.

13. Schienenfahrzeug (100-300) nach einem der Ansprüche 9 bis 12, wobei das Schienenfahrzeug ein batteriegestütztes Schienenfahrzeug, insbesondere ein Batteriefahrzeug ist, wobei das Schienenfahrzeug ein Triebfahrzeug aufweist, und/oder wobei das Schienenfahrzeug einen elektrischen Energiespeicher (389), insbesondere eine Traktionsbatterie, eine mit dem elektrischen Energiespeicher verbundene elektrodynamische Bremse als Nutzbremse aufweist.

14. Schienenfahrzeug (100-300) nach Anspruch 13, wobei das Schienenfahrzeug eine generatorisch betreibare und mit dem Energiespeicher (389) verbundene Traktionsmaschine aufweist, die in einem generatorischen Betrieb als Nutzbremse einsetzbar ist.

15. Schienenfahrzeug (100-300) nach einem der Ansprüche 9 bis 14, wobei das Schienenfahrzeug eingerichtet ist, ein Verfahren nach einem der Ansprüche 1 bis 8 auszuführen.

## Claims

1. A method (1000) for assisting in the control of a speed (v) of a rail vehicle (100, 200, 300) comprising at least one regenerative brake (181, 281, 381, 383), at least one friction brake (182, 282, 382, 384, 386), and an control element (110, 210, 310) by means of which a total braking force (F) which can be divided between the at least one regenerative brake (181, 281, 381, 383) and the at least one friction brake (182, 282, 382, 384, 386) can be set, the method comprising the following steps:
- determining (1200) an actual travel speed (vₜ ) of the rail vehicle (100, 200, 300);
- determining (1400) a desired position (S_{g}) of the control element (110, 210, 310) at which, for the current travel speed (vₜ ), a braking force portion (F₁ ) of the at least one regenerative brake (181, 281, 381, 383), which is determined according to a predetermined dependency (F₁ (v, F(S)) of the braking force portion (F₁ ) of the at least one regenerative brake (181, 281, 381, 383) with respect to the total braking force (F) on the speed (v) of the rail vehicle (100, 200, 300) and the position (S) of the control element (110, 210, 310), assumes a maximum value; and
- using (1500) the desired position (S_{g}) of the control element (110, 210, 310) to output a recommendation (E) relating to the position (S) of the control element (110, 210, 310) to a driver of the rail vehicle and/or to control a behaviour of the control element (110, 210, 310) .

2. The method (1000) according to claim 1, the method comprising determining (1100) a current position (Sₜ) of the control element (110, 210, 310), wherein the current position (Sₜ) of the control element (110, 210, 310) is used for issuing the recommendation (E), determining the recommendation to be issued and/or controlling the behaviour of the control element (110, 210, 310), 210, 310), and/or wherein a deviation of the current position (Sₜ) from the desired position (S_{g}) of the control element (110, 210, 310) is used to determine the recommendation (E) and/or to control a behaviour of the control element (110, 210, 310).

3. A method (2000) for assisted control of a speed (v) of a rail vehicle (100, 200, 300) comprising at least one regenerative brake (181, 281, 381, 383), at least one friction brake (182, 282, 382, 384, 386), and a control element (110, 210, 310) by means of which a total braking force (F) of the at least one regenerative brake (181, 281, 381, 383) and of the at least one friction brake (182, 282, 382, 384, 386) can be set, the method comprising the following steps:
- determining (2100) a current position (Sₜ) of the control element (110, 210, 310);
- determining (2200) an actual travel speed (vₜ ) of the rail vehicle (100, 200, 300);
- using (2300) the current position (Sₜ) of the control element (110, 210, 310) and the current travel speed (vₜ ) to determine a current braking force portion (F₁ₜ) of the at least one regenerative brake (181, 281, 381, 383) on a current total braking force (Fₜ) of the rail vehicle (100, 200, 300) and a current braking force portion (F₂ₜ) of the at least one friction brake (182, 282, 382, 384, 386) to the current total braking force (Fₜ), the current total braking force (Fₜ) corresponding to the current position (Sₜ), the current braking force portions (F₁ₜ. F₂ₜ) being determined in accordance with a respective predetermined dependency (F₁ (v, F(S)), F₂ (v, F(S))) of the braking force proportion (F₁ ) of the at least one regenerative brake (181, 281, 381, 383) and the braking force portion (F₂) of the at least one friction brake (182, 282, 382, 384, 386) on the speed (v) of the rail vehicle (100, 200, 300) and the position (S) of the control element (110, 210, 310);
- determining (2400) a desired position (S_{g}) of the control element (110, 210, 310) at which the braking force portion (F₁ ) of the at least one regenerative brake (181, 281, 381, 383) determined in accordance with the predetermined dependency (F₁ (v, F(S)) of the braking force portion (F₁ ) of the at least one regenerative brake (181, 281, 381, 383) on the speed (v) of the rail vehicle (100, 200, 300) and the position (S) of the control element (110, 210, 310) assumes a maximum value for the current travel speed (vₜ); and
- using (2500) the desired position (S_{g}) of the control element (110, 210, 310) to output a recommendation (E) relating to the position (S) of the control element (110, 210, 310) to a driver of the rail vehicle and/or to control a behaviour of the control element (110, 210, 310).

4. The method (1000) according to claim 3, wherein using (2500) the desired position (S_{g}) takes into account the current position (Sₜ) of the control element (110, 210, 310) and/or a deviation of the current position (Sₜ) of the control element (110, 210, 310) from the desired position (S_{g}) of the control element (110, 210, 310).

5. The method (1000, 2000) according to any one of the preceding claims, wherein the output is acoustic, optical and/or haptic.

6. The method (1000, 2000) according to any one of the preceding claims, wherein the method is performed multiple times.

7. The method (1000, 2000) according to any one of the preceding claims, wherein the method is performed during a braking process of the rail vehicle.

8. The method (1000, 2000) according to any one of the preceding claims, wherein determining (1400, 2400) the desired position (S_{g}) of the control element (110, 210, 310) and/or using (1500, 2500) the desired position (S_{g}) is performed only when the current travel speed (vₜ ) is greater than or equal to a predetermined threshold value.

9. A rail vehicle (100-300), comprising:
- at least one regenerative brake (181, 281, 381, 383);
- at least one friction brake (182, 282, 382, 384, 386);
- a control element (110, 210, 310), via the position (S) of which a total braking force (F) for the at least one regenerative brake (181, 281, 381, 383) and the at least one friction brake (182, 282, 382, 384, 386) can be set; and
- an assistance device (170, 270, 370) which is connected to the control element (110, 210, 310) and which is configured to determine a desired position (S_{g}) of the control element (110, 210, 310) at which, for the current travel speed (vₜ ), a braking force portion (F₁ ) of the at least one regenerative brake (181, 281, 381, 383), which is determined according to a predetermined dependency (F₁ (v, F(S)) of the braking force portion (F₁ ) of the at least one regenerative brake (181, 281, 381, 383) with respect to the total braking force (F) on the speed (v) of the rail vehicle (100, 200, 300) and the position (S) of the control element (110, 210, 310), assumes a maximum value, wherein the assistance device (170, 270, 370) is configured to forward the desired position (S_{g}) and/or a signal (R) correlated with the desired position (S_{g}) to the control element (110, 210, 310), 210, 310), and/or wherein the assistance device (170, 270, 370) has an output unit (150) for outputting the desired position (S_{g}) and/or a variable (E(S_{g} )) correlated with the desired position (S_{g}).

10. The rail vehicle (100-300) according to claim 9, wherein the position (S) of the control element (110, 210, 310) is correlated linearly or non-linearly with the total braking force, wherein the control element (110, 210, 310) has a driving brake lever (111, 211, 311), a driving switch or a joystick (311) and/or is configured for electronic drive-by-wire control, wherein a behaviour of the driving brake lever, the driving switch or the joystick depends on the desired position (S_{g}) and/or the signal (R) correlated with the desired position (S_{g}), of the driving switch or of the joystick depends on the desired position (S_{g}) and/or the signal (R) correlated with the desired position (S_{g}), and/or wherein the control element (110, 210, 310) has a controllable actuator which can generate a counterforce depending on the position (S), on the desired position (S_{g}) and/or the signal (R) correlated with the desired position (S_{g}).

11. The rail vehicle (100-300) according to claim 9 or 10, wherein the output unit comprises a light source, a screen (450), a vibration exciter and/or a loudspeaker.

12. The rail vehicle (100-300) according to any one of claims 9 to 11, wherein the assistance device (170, 270, 370) is integrated into a control and assistance unit (360) which is configured to operate the at least one regenerative brake (181, 281, 381, 383) with a portion of a current total braking force (Fₜ) corresponding to a current position (Sₜ) of the control element (110, 210, 310) which, at a current speed (vₜ ) of the rail vehicle, corresponds to the predetermined dependency (F₁ (v, F(S)) of the braking force portion (F₁ ) of the at least one regenerative brake (181, 281, 381, 383), and to operate the at least one friction brake (182, 282, 382, 384, 386) with a portion of the current total braking force (Fₜ) which, at the current speed (vₜ ) of the rail vehicle, corresponds to a predetermined dependency (F₂ (v, F(S))) of the braking force portion (F₂) of the at least one friction brake (182, 282, 382, 384, 386) on the speed (v) of the rail vehicle (100, 200, 300) and the position (S) of the control element (110, 210, 310).

13. The rail vehicle (100-300) according to any one of claims 9 to 12, wherein the rail vehicle is a battery-supported rail vehicle, in particular a battery vehicle, wherein the rail vehicle has a traction vehicle, and/or wherein the rail vehicle comprises an electrical energy store (389), in particular a traction battery, and an electrodynamic brake connected to the electrical energy store as a regenerative brake.

14. The rail vehicle (100-300) according to claim 13, wherein the rail vehicle has a traction machine which can be operated in a generator mode and is connected to the energy storage device (389) and which can be used as a regenerative brake in a generator mode.

15. The rail vehicle (100-300) according to any one of claims 9 to 14, wherein the rail vehicle is configured to perform a method according to any one of claims 1 to 8.

## Revendications

1. Procédé (1000) d'aide à la commande d'une vitesse (v) d'un véhicule ferroviaire (100, 200, 300), comportant au moins un frein régénératif (181, 281, 381, 383), au moins un frein à friction (182, 282, 382, 384, 386), et un élément de manipulation (110, 210, 310), par l'intermédiaire duquel une force de freinage totale (F) pouvant être répartie entre l'au moins un frein régénératif (181, 281, 381, 383) et l'au moins un frein à friction (182, 282, 382, 384, 386) peut être réglée, le procédé comportant les étapes suivantes :
- la détermination (1200) d'une vitesse de déplacement actuelle (vₜ) du véhicule ferroviaire (100, 200, 300) ;
- la détermination (1400) d'une position souhaitée (S_{g}) de l'élément de manipulation (110, 210, 310) dans laquelle une part de force de freinage (F₁) de l'au moins un frein régénératif (181, 281, 381, 383) pour la vitesse de déplacement actuelle (vₜ) prend une valeur maximale selon une dépendance prédéfinie (F₁(v, F(S)) de la part de force de freinage (F₁) de l'au moins un frein régénératif (181, 281, 381, 383) dans la force de freinage totale (F) par rapport à la vitesse (v) du véhicule ferroviaire (100, 200, 300) et à la position (S) de l'élément manipulation (110, 210, 310) ; et
- l'utilisation (1500) de la position souhaitée (S_{g}) de l'élément de manipulation (110, 210, 310) pour l'émission d'une recommandation (E) se rapportant à la position (S) de l'élément de manipulation (110, 210, 310) à un conducteur du véhicule ferroviaire et/ou pour la commande d'un comportement de l'élément de manipulation (110, 210, 310).

2. Procédé (1000) selon la revendication 1, dans lequel le procédé comporte une détermination (1100) d'une position actuelle (St) de l'élément de manipulation (110, 210, 310), la position actuelle (St) de l'élément de manipulation (110, 210, 310) étant utilisée pour l'émission de la recommandation (E), pour la détermination de la recommandation à émettre et/ou pour la commande du comportement de l'élément de manipulation (110, 210, 310), et/ou un écart entre la position actuelle (Sₜ) et la position souhaitée (S_{g}) de l'élément de manipulation (110, 210, 310) étant utilisé pour la détermination de la recommandation (E) et/ou pour la commande d'un comportement de l'élément de manipulation (110, 210, 310).

3. Procédé (2000) de commande assistée d'une vitesse (v) d'un véhicule ferroviaire (100, 200, 300), comportant au moins un frein régénératif (181, 281, 381, 383), au moins un frein à friction (182, 282, 382, 384, 386), et un élément de manipulation (110, 210, 310), par l'intermédiaire duquel une force de freinage totale (F) de l'au moins un frein régénératif (181, 281, 381, 383) et de l'au moins un frein à friction (182, 282, 382, 384, 386) peut être réglée, le procédé comportant les étapes suivantes :
- la détermination (2100) d'une position actuelle (St) de l'élément de manipulation (110, 210, 310) ;
- la détermination (2200) d'une vitesse de déplacement actuelle (vₜ) du véhicule ferroviaire (100, 200, 300) ;
- l'utilisation (2300) de la position actuelle (St) de l'élément de manipulation (110, 210, 310) et de la vitesse de déplacement actuelle (vₜ) pour la détermination d'une part de force de freinage actuelle (F₁ₜ) de l'au moins un frein régénératif (181, 281, 381, 383) dans une force de freinage totale actuelle (Fₜ) du véhicule ferroviaire (100, 200, 300) correspondant à la position actuelle (St) et d'une part de force de freinage actuelle (F₂ₜ) de l'au moins un frein à friction (182, 282, 382, 384, 386) dans la force de freinage totale actuelle (Fₜ) selon une dépendance prédéfinie (F₁(v, F(S)), F₂(v, F(S)) respective de la part de force de freinage (F₁) de l'au moins un frein régénératif (181, 281, 381, 383) et de la part de force de freinage (F₂) de l'au moins un frein à friction (182, 282, 382, 384, 386) par rapport à la vitesse (v) du véhicule ferroviaire (100, 200, 300) et à la position (S) de l'élément de manipulation (110, 210, 310) ;
- la détermination (2400) d'une position souhaitée (S_{g}) de l'élément de manipulation (110, 210, 310) dans laquelle la part de force de freinage (F₁) de l'au moins un frein régénératif (181, 281, 381, 383) pour la vitesse de déplacement actuelle (vₜ) prend une valeur maximale selon la dépendance prédéfinie (F₁(v, F(S))) de la part de force de freinage (F₁) de l'au moins un frein régénératif (181, 281, 381, 383) par rapport à la vitesse (v) du véhicule ferroviaire (100, 200, 300) et à la position (S) de l'élément de manipulation (110, 210, 310) ; et
- l'utilisation (2500) de la position souhaitée (S_{g}) de l'élément de manipulation (110, 210, 310) pour l'émission d'une recommandation (E) se rapportant à la position (S) de l'élément de manipulation (110, 210, 310) à un conducteur du véhicule ferroviaire et/ou pour la commande d'un comportement de l'élément de manipulation (110, 210, 310).

4. Procédé (1000) selon la revendication 3, dans lequel, lors de l'utilisation (2500) de la position souhaitée (S_{g}), la position actuelle (Sₜ) de l'élément de manipulation (110, 210, 310) et/ou un écart entre la position actuelle (St) de l'élément de manipulation (110, 210, 310) et la position souhaitée (S_{g}) de l'élément de manipulation (110, 210, 310) sont pris en compte.

5. Procédé (1000, 2000) selon l'une des revendications précédentes, dans lequel l'émission est acoustique, optique et/ou haptique.

6. Procédé (1000, 2000) selon l'une des revendications précédentes, dans lequel le procédé est mis en oeuvre plusieurs fois.

7. Procédé (1000, 2000) selon l'une des revendications précédentes, dans lequel le procédé est mis en oeuvre pendant une opération de freinage du véhicule ferroviaire.

8. Procédé (1000, 2000) selon l'une des revendications précédentes, dans lequel la détermination (1400, 2400) de la position souhaitée (S_{g}) de l'élément de manipulation (110, 210, 310) et/ou l'utilisation (1500, 2500) de la position souhaitée (S_{g}) sont mises en oeuvre uniquement lorsque la vitesse de déplacement actuelle (vₜ) est supérieure ou égale à une valeur seuil prédéfinie.

9. Véhicule ferroviaire (100-300), comportant :
- au moins un frein régénératif (181, 281, 381, 383) ;
- au moins un frein à friction (182, 282, 382, 384, 386) ;
- un élément de manipulation (110, 210, 310) par l'intermédiaire de la position (S) duquel une force de freinage totale (F) pour l'au moins un frein régénératif (181, 281, 381, 383) et l'au moins un frein à friction (182, 282, 382, 384, 386) peut être réglée ; et
- un dispositif d'aide (170, 270, 370) relié à l'élément de manipulation (110, 210, 310), lequel dispositif d'aide est configuré pour déterminer une position souhaitée (S_{g}) de l'élément de manipulation (110, 210, 310) dans laquelle une part de force de freinage (F₁) de l'au moins un frein régénératif (181, 281, 381, 383) pour une vitesse de déplacement actuelle (vₜ) du véhicule ferroviaire prend une valeur maximale selon une dépendance prédéfinie (F₁(v, F(S)) de la part de force de freinage (F₁) de l'au moins un frein régénératif (181, 281, 381, 383) dans la force de freinage totale (F) par rapport à la vitesse (v) du véhicule ferroviaire (100, 200, 300) et à la position (S) de l'élément de manipulation (110, 210, 310), le dispositif d'aide (170, 270, 370) étant configuré pour transmettre la position souhaitée (S_{g}) et/ou un signal (R) corrélé à la position souhaitée (S_{g}) à l'élément de manipulation (110, 210, 310), et/ou le dispositif d'aide (170, 270, 370) comportant une unité d'émission (150) pour l'émission de la position souhaitée (S_{g}) et/ou d'une grandeur (E(S_{g})) corrélée à la position souhaitée (S_{g}).

10. Véhicule ferroviaire (100-300) selon la revendication 9, dans lequel la position (S) de l'élément de manipulation (110, 210, 310) est corrélée de manière linéaire ou non linéaire à la force de freinage totale, l'élément de manipulation (110, 210, 310) comportant un levier de frein de déplacement (111, 211, 311), un commutateur de déplacement ou un manche à balai (311) et/ou étant configuré pour une commande électronique de type conduite à commande électrique, un comportement du levier de frein de déplacement, du commutateur de déplacement ou du manche à balai dépendant de la position souhaitée (S_{g}) et/ou du signal (R) corrélé à la position souhaitée (S_{g}), et/ou l'élément de manipulation (110, 210, 310) comportant un actionneur pouvant être commandé qui peut produire une force antagoniste dépendant de la position (S), de la position souhaitée (S_{g}) et/ou du signal (R) corrélé à la position souhaitée (S_{g}).

11. Véhicule ferroviaire (100-300) selon la revendication 9 ou 10, dans lequel l'unité d'émission comporte une source lumineuse, un écran (450), un générateur de vibrations et/ou un haut-parleur.

12. Véhicule ferroviaire (100-300) selon l'une des revendications 9 à 11, dans lequel le dispositif d'aide (170, 270, 370) est intégré dans une unité de commande et d'aide (360) qui est configurée pour faire fonctionner l'au moins un frein régénératif (181, 281, 381, 383) avec une part dans une force de freinage totale actuelle (Fₜ) correspondant à une position actuelle (St) de l'élément de manipulation (110, 210, 310) qui, pour une vitesse actuelle (vₜ) du véhicule ferroviaire, correspond à la dépendance prédéfinie (F₁(v, F(S)) de la part de force de freinage (F₁) de l'au moins un frein régénératif (181, 281, 381, 383), et pour faire fonctionner l'au moins un frein à friction (182, 282, 382, 384, 386) avec une part dans la force de freinage totale actuelle (Fₜ) qui, pour la vitesse actuelle (vₜ) du véhicule ferroviaire, correspond à une dépendance prédéfinie (F₂(v, F(S))) de la part de force de freinage (F₂) de l'au moins un frein à friction (182, 282, 382, 384, 386) par rapport à la vitesse (v) du véhicule ferroviaire (100, 200, 300) et à la position (S) de l'élément de manipulation (110, 210, 310).

13. Véhicule ferroviaire (100-300) selon l'une des revendications 9 à 12, dans lequel le véhicule ferroviaire est un véhicule ferroviaire soutenu par une batterie, en particulier un véhicule à batterie, le véhicule ferroviaire comportant un véhicule de traction, et/ou le véhicule ferroviaire comportant un accumulateur d'énergie (389) électrique, en particulier une batterie de traction, un frein électrodynamique relié à l'accumulateur d'énergie électrique sous la forme d'un frein régénératif.

14. Véhicule ferroviaire (100-300) selon la revendication 13, dans lequel le véhicule ferroviaire comporte une machine de traction pouvant fonctionner sous la forme d'un générateur et reliée à l'accumulateur d'énergie (389), laquelle machine de traction peut être utilisée comme frein régénératif dans un fonctionnement en mode générateur.

15. Véhicule ferroviaire (100-300) selon l'une des revendications 9 à 14, dans lequel le véhicule ferroviaire est configuré pour mettre en oeuvre un procédé selon l'une des revendications 1 à 8.
